# FASCICULE DE BREVET EUROPEEN

(11) **EP 3 956 624 B1**
(45) Date de publication et mention de la délivrance du brevet: **29.05.2024**
(21) Numéro de dépôt: 20720777.0
(22) Date de dépôt: 15.04.2020
(51) Int. Cl.: F28F 9/02, F28D 1/03, F28F 13/12, H01M 10/6556

(54) **DISPOSITIF DE RÉGULATION THERMIQUE, NOTAMMENT DE REFROIDISSEMENT POUR VÉHICULE AUTOMOBILE**
TEMPERATURREGLER, INSBESONDERE EINE KÜHLVORRICHTUNG FÜR EIN KRAFTFAHRZEUG
TEMPERATURE CONTROL DEVICE, IN PARTICULAR A COOLING DEVICE FOR A MOTOR VEHICLE

(30) Priorité: 16.04.2019 FR 1904053
(43) Date de publication de la demande: 23.02.2022
(73) Titulaire: VALEO SYSTEMES THERMIQUES, 78320 Le Mesnil Saint-Denis (FR)
(72) Inventeur: DJALLAL, Fethy, 72210 LA SUZE SUR SARTHE (FR); VERON, Julien, 72210 LA SUZE SUR SARTHE (FR); HERRY, Marc, 72210 LA SUZE SUR SARTHE (FR); BELLENFANT, Aurélie, 72210 LA SUZE SUR SARTHE (FR)
(74) Mandataire: Valeo Systèmes Thermiques
(86) Numéro de dépôt international: PCT/EP2020/060640
(87) Numéro de publication internationale: WO 2020/212457

(56) Documents cités:
- EP-A1- 2 985 560
- US-A1- 2016 356 558

## Description

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule automobile.

Les batteries de véhicules, en particulier pour véhicules électriques ou véhicules hybrides, doivent autant que possible être maintenues à température souhaitée, raison pour laquelle on utilise des dispositifs dits de refroidissement pour batteries de véhicules. Ces dispositifs de refroidissement peuvent comprendre des plaques de refroidissement à travers lesquelles circule un liquide de refroidissement. Les plaques de refroidissement sont installées, autant que possible sans espace, sur le côté extérieur des batteries dans le but de dissiper la chaleur ou bien de chauffer la batterie. On connaît des dispositifs de refroidissement dans lesquels la plaque de refroidissement est composée de deux parties de plaque qui sont normalement fixées directement l'une à l'autre. Ici, la première partie de plaque est de préférence plane, et la seconde partie de plaque est de préférence une feuille de métal emboutie ou déformée qui présente des dépressions en méandres. Lesdites dépressions sont fermées par la partie de plaque plane qui est fixée à la partie de plaque emboutie, de sorte que des conduits de réfrigérant sont formés. Le brevet EP 2 828 922 B1 décrit un tel dispositif.

On peut également citer la demande de brevet US2015144314 qui décrit un dispositif de refroidissement de batterie avec une bride de connexion de fluide. Une bride est aussi connue du document US 20160356558 A1.

L'invention vise à améliorer ce type de dispositif.

Concernant le connecteur, et dans le cadre d'un système composé de deux ou plusieurs échangeurs d'une même version, il est souvent nécessaire de modifier les diamètres des orifices de passage fluide sur le connecteur. La modification sur la bride mâle d'un pont de connexion, comme réalisé en série sur des systèmes similaires, ne permet pas d'ajuster spécifiquement chaque orifice d'entrée du connecteur. Pour cela, soit les sections de passage des orifices sur la plaque supérieure de l'échangeur doivent être modifiées, soit les orifices du connecteur femelle placé sur la plaque doivent être modifiés. Dans les deux cas, cela oblige à différencier les échangeurs d'une même version, ce qui oblige à différencier ces échangeurs et de placer le bon échangeur au bon endroit dans le système.

L'invention vise aussi à remédier aux problèmes précités.

L'invention a ainsi pour objet une bride selon la revendication 1.

La présente invention permet notamment d'éviter la création de différentes références d'une même version d'échangeur utilisées à différentes positions dans le système. L'invention propose notamment de créer sur la bride mâle du pont de connexion une fonction de dérivation par un chemin de fluide.

Le pont de connexion est déjà spécifique dans le système. Sur le dispositif de régulation thermique ou échangeur, on dispose d'une bride femelle, appelée connecteur plus haut, avec 3 voies notamment brasée sur l'échangeur. Le calibrage des sections de passage afin d'équilibrer le système peut se faire sur cette nouvelle bride au niveau des orifices et ne pas modifier les orifices des brides femelle des échangeurs. Cette invention permet notamment de modifier les orifices de la bride du pont de connexion sans changer celle de la bride femelle liée à l'échangeur, ce qui évite de distinguer les références et évite au client de les placer dans le système à l'endroit adéquat dans le système.

Selon l'invention, la bride comporte un chemin de fluide communiquant avec l'entrée de fluide de la bride, cette entrée de fluide étant notamment formée par un orifice dans la bride, ce chemin de fluide tant configuré pour distribuer le fluide réfrigérant venant de cette entrée de fluide vers les deux orifices de distribution.

Selon l'invention, cette bride du pont de connexion comporte un orifice de collecte de fluide configuré pour collecter du fluide réfrigérant provenant du connecteur du dispositif de régulation thermique, cet orifice de collecte communiquant avec la sortie de fluide de la bride via un canal dans la bride, canal notamment de forme cylindrique, cet orifice de collecte étant agencé pour être placé en vis-à-vis de l'orifice de sortie de fluide du connecteur du dispositif de régulation thermique.

Selon l'un des aspects de l'invention, les orifices de distribution et de collecte de fluide sur la bride sont formés sur une même face de la bride, face venant en vis-à-vis avec une face du connecteur du dispositif de régulation thermique, et cette face étant notamment opposée à une face sur laquelle sont formées les entrée et sortie de fluide de la bride.

Selon l'invention, les orifices de distribution et de collecte de fluide sur la bride comportent chacun un embout notamment de forme sensiblement conique, embout configuré pour coopérer chacun avec l'un des deux orifices d'entrée et l'orifice de sortie sur le connecteur du dispositif de régulation thermique.

Selon l'un des aspects de l'invention, le chemin de fluide dans la bride comporte un tronçon principal perpendiculaire au canal débouchant sur l'orifice de collecte, ce tronçon et ce canal étant séparé l'un de l'autre.

Selon de l'invention, le chemin de fluide est formé par une rainure réalisée sur un corps de la bride et fermé par un capot fixé de manière étanche sur le corps, ce capot étant notamment de forme allongée. Le corps est par exemple formé par extrusion et usinage pour former les orifices.

Notamment le capot est brasé sur le corps, par exemple par induction, laser, friction, lame chauffante... Le capot comporte une plaque agencée pour se loger au moins partiellement dans la rainure, ce capot étant par exemple soudé sur le corps.

Le capot peut être serti sur la bride, ou corps, et équipé d'un joint d'étanchéité sur le pourtour du capot.

Selon l'un des aspects de l'invention, le capot comporte une patte, notamment de forme rectangulaire, se loger dans une encoche de forme complémentaire de la patte.

Selon l'un des aspects de l'invention, le capot comporte deux oreilles de fixation agencées pour venir en appui notamment sur deux faces latérales du corps.

Selon l'un des aspects de l'invention, le corps de la bride est réalisé notamment en aluminium, notamment par extrusion et usinage, et le capot est réalisé notamment en aluminium.

L'invention a encore pour objet un pont de connexion comportant une bride telle décrite ci-dessus, et deux tubulures reliées à l'entrée et à la sortie de la bride, notamment une autre bride est prévue aux autres extrémités des tubulures.

L'invention concerne encore un ensemble comportant le pont de connexion tel décrit ci-dessus, et un dispositif de régulation thermique avec un connecteur assemblé avec la bride du pont de connexion.

Les caractéristiques et avantages de l'invention apparaitront plus clairement à la lecture de la description suivante, donnée à titre d'exemple illustratif et non limitatif, et des dessins annexés parmi lesquels :
- la [fig.1] illustre, schématiquement et partiellement, un dispositif selon un exemple non conforme à l'invention ;
- la [fig.2] illustre, schématiquement et partiellement, le dispositif de la [Figure 1] selon une vue différente,
- la [fig.3] illustre, schématiquement et partiellement, un dispositif selon un autre exemple non conforme à l'invention,
- la [fig.4] illustre, schématiquement et partiellement, le dispositif de la [Figure 3] selon une vue différente,
- la [fig.5] illustre, schématiquement et partiellement, un connecteur d'un dispositif non conforme à l'invention,
- la [fig.6] illustre, schématiquement et partiellement, le connecteur de la [Figure 5] selon une vue différente,
- la [fig.7] illustre, schématiquement et partiellement, un connecteur non conforme à l'invention,
- la [fig.8] illustre, schématiquement et partiellement, le connecteur de la [Figure 7] selon une vue différente,
   la [fig.9] illustre, schématiquement et partiellement, un pont de connexion selon un exemple de l'invention,
   la [fig.10] illustre, schématiquement et partiellement, un échangeur et le pont de connexion selon la [Figure 9].

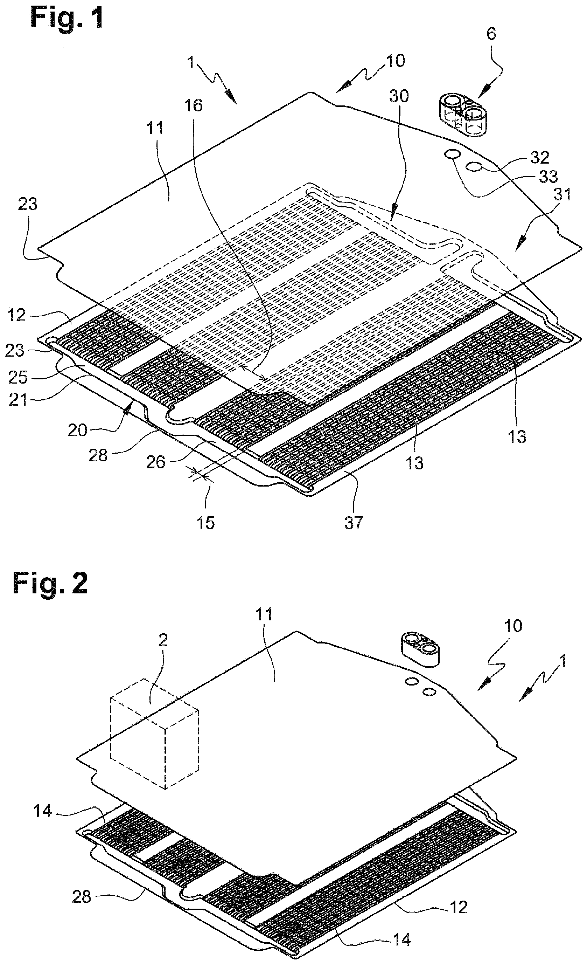

On a représenté sur la [fig.1] et sur la [Figure 2] un système 1 comportant un ensemble de cellules de batterie 2 à refroidir, par exemple rangées suivant deux rangées ou plus, et un dispositif de refroidissement 10 agencé pour refroidir les cellules 2, qui sont en contact thermique avec une plaque supérieure du dispositif de refroidissement 10, comme expliqué plus bas.

Le dispositif de régulation thermique 10 comporte une plaque supérieure 11, une plaque inférieure 12 assemblée avec la plaque supérieure 11 pour former ensemble une pluralité de canaux 13 de circulation pour un fluide caloporteur, notamment un fluide réfrigérant, notamment un fluide choisi parmi les fluides réfrigérants suivants R134a, R1234yf ou R744. Les canaux 13 sont regroupés par groupes 14 de canaux, les canaux d'un groupe s'étendant sensiblement parallèlement les uns aux autres avec un espacement prédéterminé entre canaux voisins appelé espacement intra-groupe 15, l'espacement intra-groupe étant strictement inférieur à l'espacement entre deux groupes de canaux voisins appelé espacement intergroupe 16. Les canaux 13 présentent chacun une section transversale comprise entre 1 mm2 et 9 mm2. Les canaux 13 présentent tous une même section transversale et sont rectilignes. Les canaux 13 s'étendent sensiblement sur toute la longueur des plaques. Les groupes 14 de canaux sont disposés côte à côte et présentent la même longueur. L'espacement intra-groupe 15 entre les différents canaux 13 d'un même groupe de canaux est constant, dans l'exemple considéré. L'espacement intergroupe 16 entre les différents groupes de canaux est constant, dans l'exemple considéré. Le dispositif de refroidissement comporte une chambre de virage 20 agencée pour conduire le fluide sortant de l'un des groupes 14 de canaux vers l'un des autres groupes de canaux. Tous les canaux 13 du groupe débouchent sur cette chambre de virage. La chambre de virage 20 est formée par les plaques supérieure 11 et inférieure 12, par exemple en aluminium. La plaque inferieure 12 comporte une zone emboutie 21 agencée pour participer à la formation de la chambre de virage 20. La zone emboutie 21 est fermée avec l'autre des plaques 11 qui est plane pour former la chambre de virage 20. La chambre de virage 20 s'étend sur un côté 23 des plaques. Le dispositif comporte quatre groupes 14 de canaux. Le nombre de groupe de canaux dédiés à une circulation de fluide réfrigérant dans un sens est égal au nombre de groupes de canaux dédiés à la circulation de fluide dans le sens opposé. Deux groupes 14 de canaux de même sens de circulation de fluide débouchent sur la chambre de virage. Ces deux groupes de canaux sont voisins, sur une moitié des plaques. La chambre de virage 20 est connectée fluidiquement à deux autres groupes 14 de canaux qui sont agencés pour accueillir le fluide réfrigérant qui quittent la chambre de virage. Ces deux groupes de canaux sont voisins sur l'autre moitié des plaques. Ainsi quatre groupes de canaux sont reliés à la chambre de virage commune 20. Les deux groupes 14 de canaux d'arrivée sur la chambre de virage 20 sont disposés sur une branche 25 de la chambre de virage et les deux groupes de canaux de sortie de la chambre de virage sont disposés sur une autre branche 26 de la chambre de virage. Le sens de circulation des fluides est montré par des flèches. Ces branches 25 et 26 de la chambre de virage 20 ont sensiblement rectilignes, et perpendiculaires aux canaux. Un coude 28 est agencé pour relié les deux branches 25 et 26 de la chambre de virage. Le dispositif de refroidissement comporte une zone d'entrée 30 de fluide réfrigérant des canaux, cette zone d'entrée étant formée entre les deux plaques 11 et 12. Cette zone d'entrée 30 de fluide est agencée pour alimenter tous les canaux 13 de circulation de fluide qui débouchent sur la chambre de virage 20, à savoir les canaux dans lesquels le fluide s'écoule vers la chambre de virage. Cette zone d'entrée 30 est commune aux groupes 14 de canaux. Le dispositif de refroidissement comporte une zone de sortie 31 de fluide réfrigérant des canaux, cette zone de sortie étant formée entre les deux plaques 11 et 12. Cette zone de sortie 31 de fluide est agencée pour conduire le fluide sortant de tous les canaux 13 de circulation de fluide qui proviennent de la chambre de virage. Cette zone de sortie 31 est commune aux deux groupes de canaux. Les zones d'entrée 30 et 31 et de sortie sont adjacentes à un orifice d'entrée 32, respectivement de sortie 33. Les orifices d'entrée 32 et de sortie 33 sont reliés à un bloc de raccord 6 de tubulures. La plaque inférieure 2 comporte des zones de section transversale arrondie, notamment des zones embouties, pour former avec la plaque supérieure les canaux 13. Les zones d'entrée 30 et de sortie 31 comportent des zones embouties de la plaque inferieure 12. Préférentiellement le fluide caloporteur peut être choisi parmi les fluides réfrigérants d'appellation R134a, R1234yf ou R744. Le fluide caloporteur utilisé est alternativement de l'eau glycolée, sans limitation du titre de glycol (0% à 100%). Les cellules de batterie comprennent par exemple une pluralité de batteries au lithium-ion (Li-ion) pour une utilisation dans un véhicule hybride. Dans un autre exemple la pluralité de cellules de batterie sont des batteries Li-ion pour une utilisation dans un véhicule électrique à batterie. La chambre de virage 20 et/ou la zone d'entrée 30 et/ou la zone de sortie 31 comportent, le cas échéant, des éléments de renfort pour renforcer la tenue mécanique dans ces zones qui sont potentiellement de plus forte section.

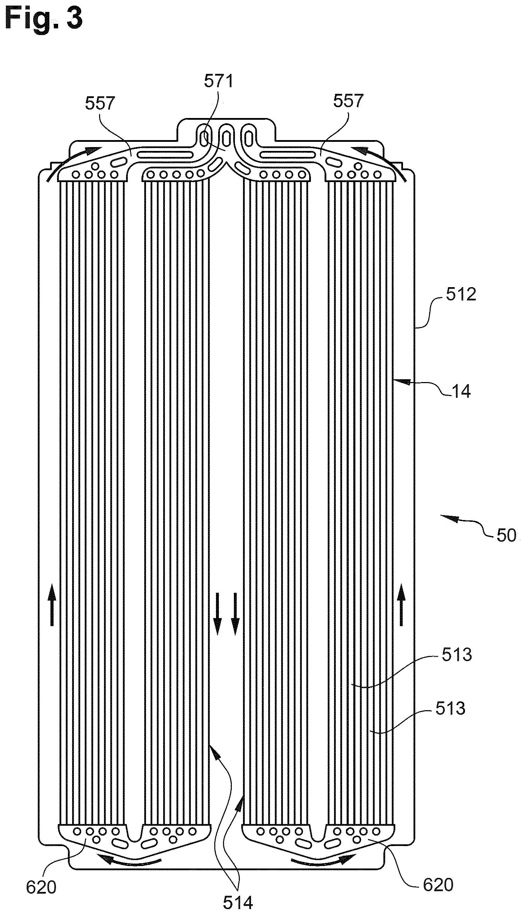

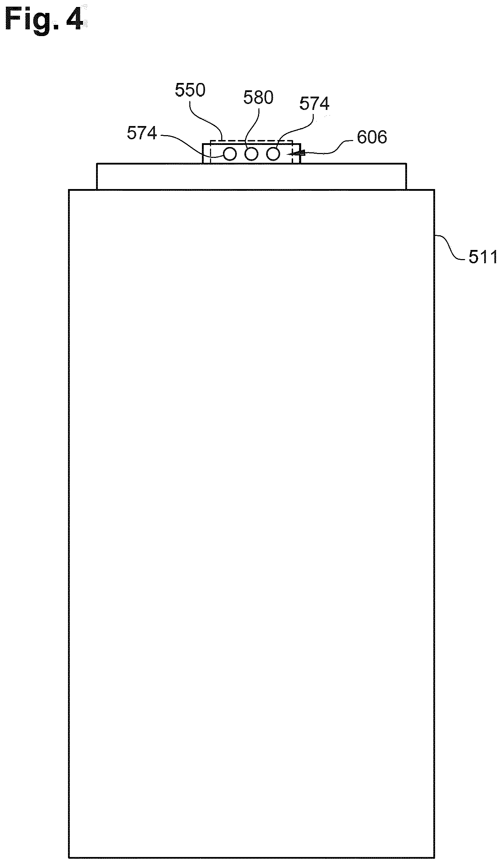

On a représenté en référence à la [fig.3] et à la [Figure 4], un autre mode de réalisation de l'invention, à savoir un dispositif de régulation thermique 50, ici de refroidissement, pour un module de stockage d'énergie électrique, ce dispositif comportant une plaque supérieure 511 et une plaque inférieure 512 assemblée avec la plaque supérieure 511 pour former ensemble une pluralité de canaux 513 de circulation pour un fluide caloporteur, dispositif dans lequel les canaux sont regroupés par groupes 14 de canaux, les canaux d'un groupe s'étendant sensiblement parallèlement les uns aux autres avec un espacement prédéterminé entre canaux voisins, deux groupes 14 de canaux ayant un même sens de circulation de fluide étant séparés entre eux par deux groupes 614 voisins de canaux ayant un sens de circulation de fluide opposé.

Des chambres de virage 620 sont prévus, à l'une des extrémités des canaux 13, pour raccorder par un virage à 180° l'un des groupes de canaux 14 au groupe de de canaux 614 voisin.

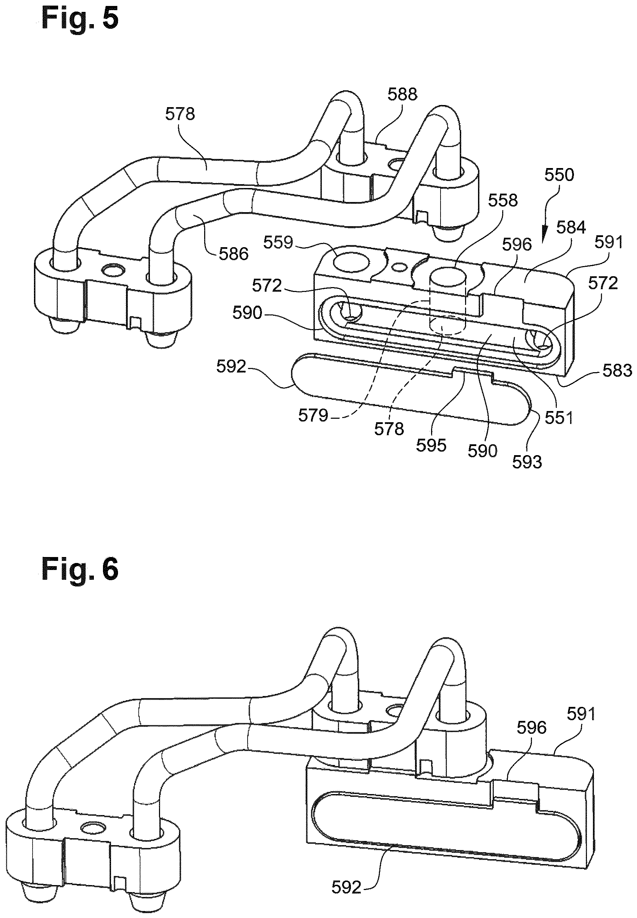

Le dispositif 50 comportant un connecteur 550 assemblé sur la plaque supérieure 511, comme illustré sur la [fig.4] et sur la [Figure 5] ainsi que sur la [Figure 6].

Ce connecteur 550 est agencé pour créer un chemin de fluide 551 pour raccorder deux zones collectrices de sortie 557 des deux groupes de canaux 14 ayant le même sens de circulation illustré par flèches, ces zones collectrices 557 étant formées entre les deux plaques inférieure 512 et supérieure 511, ce connecteur 550 comportant un orifice externe d'entrée 558 de fluide et un orifice externe de sortie 559 de fluide, l'orifice externe de sortie 559 étant en communication de fluide avec le chemin de fluide 551 du connecteur et l'autre des orifice externe 558 étant en communication de fluide avec une zone collectrice 571 de fluide du groupe intermédiaire 614 de canaux situé entre les deux groupes de canaux 14 reliés entre eux par le chemin de fluide 551 dans le connecteur 50.

Le connecteur 50 comporte deux orifices internes 572 sur lesquels débouchent le chemin de fluide 551 du connecteur, chemin qui en outre communique avec l'orifice externe 559, ces orifices internes 572 étant placés en vis-à-vis respectivement de deux trous 574 dans la plaque 511, trous qui débouchent sur les zones collectrices associées 557, et le connecteur 550 comporte un troisième orifice interne 578 qui communique avec l'autre des orifices externes 558 via un canal droit cylindrique 579 dans le connecteur, ce troisième orifice 558 interne étant placé en vis-à-vis d'un trou 580 dans la plaque 511 qui débouche sur la zone collectrice 571 du groupe intermédiaire de canaux. Dans un exemple, le connecteur 550 comporte ainsi en tout cinq orifices, à savoir 558, 559, 572 en deux exemplaires et 578.

Les orifices internes 572 et 578 sont sur une même face 583 du connecteur, face venant en contact avec la plaque, et les orifices externes 558 et 559 sont sur une face opposée 584 du connecteur de manière à permettre de raccorder sur ces orifices externes des conduits externes 586 et 587, l'un 586 apportant du fluide et l'autre 587 l'évacuant. Ces conduits sont fixés à une bride 588 commune, et se raccordent à une boucle de fluide.

Le chemin de fluide 551 comporte un tronçon principal 590 perpendiculaire au canal 579 débouchant sur le troisième orifice interne 578, ce tronçon rectiligne 590 et ce canal 579 étant séparés l'un de l'autre.

Le chemin de fluide 551 est formé par une rainure 590 creusée sur un corps 591 du connecteur et fermé par un capot 592 fixé de manière étanche sur le corps, ce capot 592 étant de forme allongée correspondant sensiblement la gorge de la rainure 590.

Le capot 592 comporte une plaque 593 agencée pour se loger au moins partiellement dans la rainure 590, ce capot 592 étant par exemple soudé sur le corps 591.

Le capot 592 comporte une patte 595, de forme rectangulaire, se loger dans une encoche 596 de forme complémentaire de la patte.

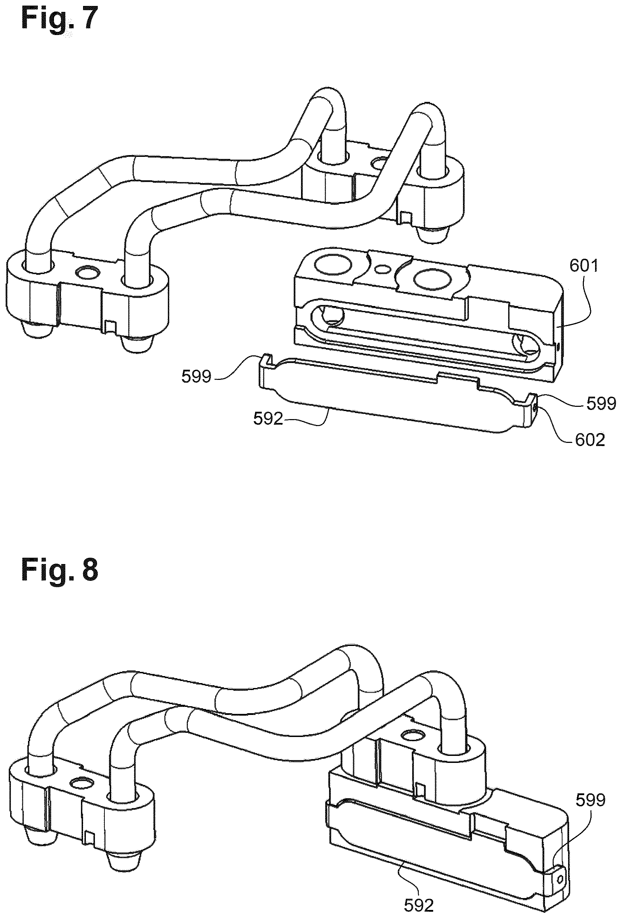

En variante, comme illustré sur la [fig.7] et sur la [Figure 8], le capot 592 comporte deux oreilles de fixation latérales 599 agencées pour venir en appui sur deux faces latérales 601 du corps. Le maintien du capot 592 sur le corps se fait par sertissage des oreilles latérales 599 au niveau des zones 602.

Le corps 591 du connecteur est réalisé notamment en aluminium, notamment par extrusion et usinage, et le capot 592est réalisé en aluminium.

La plaque supérieure 511 comporte trois trous 574 et 580, deux des trous étant associé à des groupes de canaux de même sens de circulation et un trous intermédiaire, entre ces deux trous, qui est associé à un groupe de canaux de fluide de sens opposé, ces trois trous étant notamment alignés. Ces trous sont par exemple sur une région rétrécie 606 de la plaque 511.

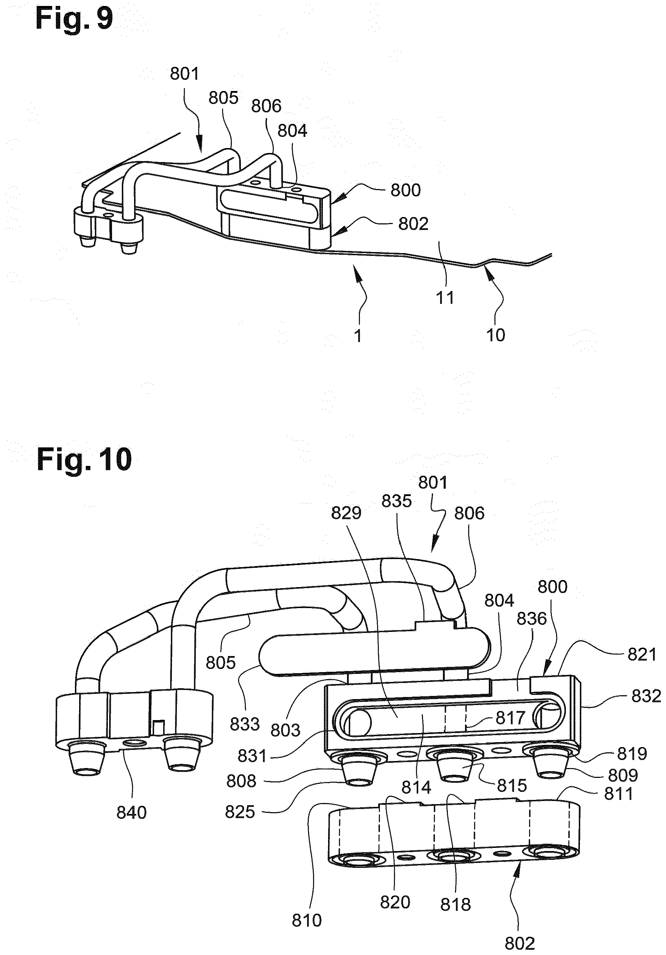

On a représenté sur la [fig.9] et la [Figure 10] une bride 800 d'un pont de connexion fluidique 801, bride 800 configurée pour être assemblée avec un connecteur 802 d'un dispositif de régulation thermique 10 de refroidissement pour un module de stockage d'énergie électrique, la bride 800 comportant une entrée de fluide 803 et une sortie de fluide 804 toutes deux configurées pour être connectées chacune à un conduit externe respectif 805 et 806, ou tubulure, cette bride 800 étant agencée pour distribuer un flux de fluide réfrigérant venant de l'entrée de fluide 803 de la bride vers au moins deux orifices de distribution 808 et 809 de la bride en scindant ce flux de fluide réfrigérant en au moins deux flux de fluide, orifices de distribution 808 et 809 configurés pour distribuer du fluide réfrigérant respectivement vers deux orifices d'entrée 810 et 811 du connecteur 802 sur le dispositif de régulation thermique 10.

Le pont de connexion est déjà spécifique dans le système. Sur le dispositif de régulation thermique ou échangeur, on dispose d'une bride femelle, appelée connecteur plus haut, avec 3 voies notamment brasée sur l'échangeur. Le calibrage des sections de passage afin d'équilibrer le système peut se faire sur cette nouvelle bride au niveau des orifices et ne pas modifier les orifices des brides femelle des échangeurs. Cette invention permet notamment de modifier les orifices de la bride du pont de connexion sans changer celle de la bride femelle liée à l'échangeur, ce qui évite de distinguer les références et évite au client de les placer dans le système à l'endroit adéquat dans le système.

La bride 800 comporte un chemin de fluide 814 communiquant avec l'entrée 803 de fluide de la bride, cette entrée de fluide étant formée par un orifice dans la bride, ce chemin de fluide tant configuré pour distribuer le fluide réfrigérant venant de cette entrée de fluide vers les deux orifices de distribution 808 et 809.

Cette bride 800 du pont de connexion comporte un orifice de collecte de fluide 815 configuré pour collecter du fluide réfrigérant provenant du connecteur 802 du dispositif de régulation thermique, cet orifice de collecte 815 communiquant avec la sortie de fluide 804 de la bride 800 via un canal 817 dans la bride, canal de forme cylindrique, cet orifice de collecte 815 étant agencé pour être placé en vis-à-vis de l'orifice de sortie 818 de fluide du connecteur 802 du dispositif de régulation thermique.

Les orifices de distribution 808 et 809 et de collecte 815 de fluide sur la bride 800 sont formés sur une même face 819 de la bride, face venant en vis-à-vis avec une face 820 du connecteur du dispositif de régulation thermique, et cette face 819 étant notamment opposée à une face 821 sur laquelle sont formées les entrée 803 et sortie 804 de fluide de la bride.

Les orifices de distribution 808 et 809 et de collecte 815 de fluide sur la bride 800 comportent chacun un embout 825 notamment de forme sensiblement conique, embout configuré pour coopérer chacun avec l'un des deux orifices d'entrée 810 et 811 et l'orifice de sortie 818 sur le connecteur du dispositif de régulation thermique 10.

Le chemin de fluide 814 dans la bride 800 comporte un tronçon principal 829 perpendiculaire au canal 817 débouchant sur l'orifice de collecte 815, ce tronçon et ce canal étant séparé l'un de l'autre.

Le chemin de fluide 814 est formé par une rainure 831 réalisée sur un corps 832 de la bride et fermé par un capot 833 fixé de manière étanche sur le corps 832, ce capot étant de forme allongée. Le corps 832 est par exemple formé par extrusion et usinage pour former les orifices.

Notamment le capot 833 est brasé sur le corps 832, par exemple par induction, laser, friction, lame chauffante... Le capot 833 comporte une plaque agencée pour se loger au moins partiellement dans la rainure, ce capot étant par exemple soudé sur le corps.

Selon l'un des aspects de l'invention, le capot 833 comporte une patte 835, notamment de forme rectangulaire, se loger dans une encoche 836 de forme complémentaire de la patte.

Selon l'un des aspects de l'invention, le corps de la bride est réalisé notamment en aluminium, notamment par extrusion et usinage, et le capot est réalisé notamment en aluminium.

Le pont de connexion 801 comportant la bride 800 et les deux tubulures 805 et 806 reliées à l'entrée et à la sortie de la bride, une autre bride 840 est prévue aux autres extrémités des tubulures 805 et 806.

Le connecteur 802 comporte deux orifices 572 internes sur lesquels débouchent le chemin de fluide 814 du connecteur, chemin qui en outre communique avec l'orifice d'entrée 810 et 811, ces orifices internes étant placés en vis-à-vis respectivement de deux trous 574 dans la plaque 511, trous qui débouchent sur les zones collectrices associées 557, et le connecteur 802 comporte un troisième orifice 578 interne qui communique avec l'orifice de sortie 818 via un canal droit cylindrique dans le connecteur, ce troisième orifice interne étant placé en vis-à-vis d'un trou 580 dans la plaque 511 qui débouche sur la zone collectrice 571 du groupe intermédiaire de canaux. Dans cet exemple de l'invention, le connecteur 802 comporte ainsi en tout six orifices de fluide.

La bride 800 comporte, quant à elle, 5 orifices de fluide comme décrit plus haut.

## Revendications

1. Bride (800) pour un pont de connexion fluidique (801), bride configurée pour être assemblée avec un connecteur comprenant deux orifices d'entrée et un orifice de sortie d'un dispositif de régulation thermique (10), notamment de refroidissement, pour composant électrique susceptible de dégager de la chaleur lors de son fonctionnement, notamment pour un module de stockage d'énergie électrique, la bride comportant une entrée de fluide et une sortie de fluide toutes deux configurées pour être connectées chacune à un conduit externe respectif (805 ; 806), ou tubulure, cette bride étant agencée pour distribuer un flux de fluide réfrigérant venant de l'entrée de fluide de la bride vers au moins deux orifices de distribution de la bride en scindant ce flux de fluide réfrigérant en au moins deux flux de fluide, orifices de distribution (808, 809) configurés pour distribuer du fluide réfrigérant respectivement vers deux orifices d'entrée du connecteur sur le dispositif de régulation thermique, la bride (800) comporte un chemin de fluide (814) communiquant avec l'entrée de fluide de la bride, cette entrée de fluide étant notamment formée par un orifice dans la bride, ce chemin de fluide tant configuré pour distribuer le fluide réfrigérant venant de cette entrée de fluide vers les deux orifices de distribution, le chemin de fluide étant formé par une rainure réalisée sur un corps de la bride et fermé par un capot (833) fixé de manière étanche sur le corps, ce capot étant notamment de forme allongée, la bride comportant en outre un orifice de collecte de fluide (815) configuré pour collecter du fluide réfrigérant provenant du connecteur du dispositif de régulation thermique, cet orifice de collecte communiquant avec la sortie de fluide (804) de la bride via un canal (817) dans la bride, canal notamment de forme cylindrique, cet orifice de collecte étant agencé pour être placé en vis-à-vis de l'orifice de sortie de fluide du connecteur du dispositif de régulation thermique, les orifices de distribution et de collecte de fluide sur la bride comportant chacun un embout notamment de forme sensiblement conique, embout configuré pour coopérer chacun avec l'un des deux orifices d'entrée et l'orifice de sortie sur le connecteur du dispositif de régulation thermique.

2. Bride selon la revendication précédente, **caractérisée en ce que** ses orifices de distribution (808, 809) et de collecte (815) de fluide sur la bride sont formés sur une même face (819) de la bride, face venant en vis-à-vis avec une face du connecteur du dispositif de régulation thermique, et cette face étant notamment opposée à une face sur laquelle sont formées les entrée et sortie de fluide de la bride.

3. Bride selon l'une des revendications 2 à 4, **caractérisé en ce que** le chemin de fluide (814) dans la bride comporte un tronçon principal perpendiculaire au canal débouchant sur l'orifice de collecte, ce tronçon et ce canal étant séparé l'un de l'autre.

4. Bride selon la revendication précédente, **caractérisé en ce que** le capot comporte une plaque agencée pour se loger au moins partiellement dans la rainure, ce capot étant par exemple soudé sur le corps.

5. Pont de connexion comportant une bride (800) selon l'une des revendications précédentes, et deux tubulures reliées à l'entrée et à la sortie de la bride, notamment une autre bride est prévue aux autres extrémités des tubulures.

6. Ensemble comportant le pont de connexion (801) selon la revendication précédente, et un dispositif de régulation thermique avec un connecteur assemblé avec la bride du pont de connexion.

## Patentansprüche

1. Flansch (800) für eine Fluidverbindungsbrücke (801), wobei der Flansch dazu konfiguriert ist, mit einem Verbindungsstück mit zwei Einlassöffnungen und einer Auslassöffnung einer Temperaturregelungsvorrichtung (10), insbesondere einer Kühlvorrichtung, für eine elektrische Komponente, die während ihres Betriebs Wärme abgeben kann, insbesondere für ein Modul zur Speicherung elektrischer Energie, zusammengefügt zu werden, wobei der Flansch einen Fluideinlass und einen Fluidauslass umfasst, die beide dazu konfiguriert sind, jeweils mit einer jeweiligen externen Leitung (805; 806) bzw. einem Rohr verbunden zu werden, wobei dieser Flansch dazu eingerichtet ist, einen Kühlfluidfluss, der von dem Fluideinlass des Flansches kommt, zu mindestens zwei Verteilungsöffnungen des Flansches zu verteilen und diesen Kühlfluidfluss dabei in mindestens zwei Fluidflüsse aufzuspalten, wobei die Verteilungsöffnungen (808, 809) dazu konfiguriert sind, Kühlfluid jeweils zu zwei Einlassöffnungen des Verbindungsstücks an der Temperaturregelungsvorrichtung zu verteilen, wobei der Flansch (800) einen Fluidweg (814) umfasst, der mit dem Fluideinlass des Flansches kommuniziert, wobei dieser Fluideinlass insbesondere durch eine Öffnung in dem Flansch gebildet ist, wobei dieser Fluidweg dazu konfiguriert ist, das von diesem Fluideinlass kommende Kühlfluid zu den zwei Verteilungsöffnungen zu verteilen, wobei der Fluidweg durch eine an einem Körper des Flansches hergestellte Nut gebildet ist und durch eine Kappe (833), die dichtend an dem Körper befestigt ist, verschlossen wird, wobei diese Kappe insbesondere eine längliche Form aufweist, wobei der Flansch ferner eine Fluidsammelöffnung (815) umfasst, die dazu konfiguriert ist, von dem Verbindungsstück der Temperaturregelungsvorrichtung kommendes Kühlfluid zu sammeln, wobei diese Sammelöffnung über einen Kanal (817) in dem Flansch mit dem Fluidauslass (804) des Flansches kommuniziert, wobei der Kanal insbesondere eine zylindrische Form aufweist, wobei diese Sammelöffnung dazu eingerichtet ist, gegenüber der Fluidauslassöffnung des Verbindungsstücks der Temperaturregelungsvorrichtung platziert zu sein, wobei die Fluidverteilungs- und - sammelöffnungen an dem Flansch jeweils einen Stutzen insbesondere mit im Wesentlichen konischer Form umfassen, wobei der Stutzen dazu konfiguriert ist, jeweils mit einer der zwei Einlassöffnungen und der Auslassöffnung an dem Verbindungsstück der Temperaturregelungsvorrichtung zusammenzuwirken.

2. Flansch nach dem vorhergehenden Anspruch, **dadurch gekennzeichnet, dass** seine Fluidverteilungsöffnungen (808, 809) und seine Fluidsammelöffnung (815) an dem Flansch auf einer gleichen Seite (819) des Flansches gebildet sind, wobei die Seite gegenüber einer Seite des Verbindungsstücks der Temperaturregelungsvorrichtung zu liegen kommt und wobei diese Seite insbesondere zu einer Seite entgegengesetzt ist, auf der der Fluideinlass und -auslass des Flansches gebildet sind.

3. Flansch nach einem der vorhergehenden Ansprüche, **dadurch gekennzeichnet, dass** der Fluidweg (814) in dem Flansch einen Hauptabschnitt umfasst, der zu dem an der Sammelöffnung mündenden Kanal senkrecht ist, wobei dieser Abschnitt und dieser Kanal voneinander getrennt sind.

4. Flansch nach dem vorhergehenden Abschnitt, **dadurch gekennzeichnet, dass** die Kappe eine Platte umfasst, die dazu eingerichtet ist, mindestens teilweise in der Nut aufgenommen zu werden, wobei diese Kappe beispielsweise an den Körper geschweißt ist.

5. Verbindungsbrücke, die einen Flansch (800) nach einem der vorhergehenden Ansprüche und zwei Rohre, die mit dem Einlass und dem Auslass des Flansches verbunden sind, umfasst, wobei insbesondere ein weiterer Flansch an den anderen Enden der Rohre vorgesehen ist.

6. Anordnung, die die Verbindungsbrücke (801) nach dem vorhergehenden Anspruch und eine Temperaturregelungsvorrichtung mit einem Verbindungsstück, das mit dem Flansch der Verbindungsbrücke zusammengefügt ist, umfasst.

## Claims

1. Flange (800) for a fluidic connection bridge (801), the flange configured to be assembled with a connector comprising two inlet orifices and one outlet orifice of a temperature control device (10), in particular a cooling device, for an electrical component capable of releasing heat during its operation, in particular for an electrical energy storage module, the flange comprising a fluid inlet and a fluid outlet, both configured to be each connected to a respective external duct (805; 806), or pipe, this flange being designed to distribute a flow of refrigerant fluid coming from the fluid inlet of the flange to at least two distribution orifices of the flange by splitting this flow of refrigerant fluid into at least two flows of fluid, distribution orifices (808, 809) configured to distribute refrigerant fluid respectively to two inlet orifices of the connector on the temperature control device, the flange (800) comprising a fluid path (814) communicating with the fluid inlet of the flange, this fluid inlet being in particular formed by an orifice in the flange, this fluid path being configured to distribute the refrigerant fluid coming from this fluid inlet to the two distribution orifices, the fluid path being formed by a slot made on a body of the flange and closed by a cover (833) fixed in a sealed manner to the body, this cover being in particular of elongate shape, the flange additionally comprising a fluid collection orifice (815) configured to collect refrigerant fluid coming from the connector of the temperature control device, this collection orifice communicating with the fluid outlet (804) of the flange via a channel (817) in the flange, the channel in particular being of cylindrical shape, this collection orifice being designed to be placed opposite the fluid outlet orifice of the connector of the temperature control device, the fluid distribution and collection orifices on the flange each comprising a nozzle, in particular of substantially conical shape, the nozzle configured in each case to cooperate with one of the two inlet orifices and the outlet orifice on the connector of the temperature control device.

2. Flange according to the preceding claim, **characterized in that** its fluid distribution (808, 809) and collection (815) orifices on the flange are formed on the same face (819) of the flange, the face coming opposite a face of the connector of the temperature control device, and this face being in particular opposite to a face on which the fluid inlet and outlet of the flange are formed.

3. Flange according to one of the preceding claims, **characterized in that** the fluid path (814) in the flange comprises a main section perpendicular to the channel opening onto the collection orifice, this section and this channel being separated from each other.

4. Flange according to the preceding claim, **characterized in that** the cover comprises a plate designed to be housed at least partially in the slot, this cover being for example welded to the body.

5. Connection bridge comprising a flange (800) according to one of the preceding claims, and two pipes connected to the inlet and to the outlet of the flange, in particular another flange being provided at the other ends of the pipes.

6. Assembly comprising the connection bridge (801) according to the preceding claim, and a temperature control device with a connector assembled with the flange of the connection bridge.
